# EUROPÄISCHE PATENTSCHRIFT

(11) **EP 1 559 914 B1**
(45) Veröffentlichungstag und Bekanntmachung des Hinweises auf die Patenterteilung: **09.05.2007**
(21) Anmeldenummer: 04001872.3
(22) Anmeldetag: 29.01.2004
(51) Int. Cl.: F04D 19/04, F04D 29/04, F16C 32/06

(54) **Gasreibungspumpe**
Gas friction pump
Pompe à effet visqueux

(43) Veröffentlichungstag der Anmeldung: 03.08.2005
(73) Patentinhaber: Pfeiffer Vacuum GmbH, 35614 Asslar (DE)
(72) Erfinder: Conrad, Armin, 35745 Herborn (DE); Stanzel, Jörg, 35583 Wetzlar (DE)

(56) Entgegenhaltungen:
- DE-A- 3 716 221
- DE-A- 4 327 506
- FR-A- 1 475 765
- PATENT ABSTRACTS OF JAPAN vol. 1995, no. 11, 26. Dezember 1995 (1995-12-26) & JP 07 217586 A (HITACHI LTD), 15. August 1995 (1995-08-15)

## Beschreibung

Die Erfindung betrifft eine Gasreibungspumpe nach dem Oberbegriff des ersten Patentanspruches.

Die Herstellung von Halbleitern stellt hohe Anforderungen an die zur Verwendungen kommenden Vakuumpumpen. Es treten in diesen Herstellungsprozessen hohe Gaslasten auf und die Reinheit des Vakuums soll möglichst hoch sein. Insbesondere sollen Kohlenwasserstoffe zuverlässig aus dem Prozessraum entfernt werden können.
Diese Anforderung wird durch Gasreibungspumpen im besonderen Maße erfüllt, da bei ihnen aufgrund ihrer Funktionsweise das Druckverhältnis exponentiell mit dem Molekulargewicht ansteigt. Auf dem Markt erfolgreich sind hier die Turbomolekularpumpen und die Molekularpumpen, zum Beispiel nach Art von Holweck. Oft werden beide Pumpenarten miteinander kombiniert, um eine gute Vorvakuumverträglichkeit zu erreichen.
Problematisch sind bei diesen Pumpen die Lagerstellen der Rotoren. Ursprünglich verwendete man öl- oder fettgeschmierte Kugellager, die für die oben beschriebene Anwendung allerdings nachteilig sind. Während bei laufender Pumpe eine effektive Absaugung der aus den Ölen und Fetten austretenden Kohlenwasserstoffe durch die Pumpe selbst erfolgt, können sie während die Pumpe steht in die Prozesskammer gelangen. Neben diesem Problem sind Kugellager in hohem Maße wartungsanfällig.
Zielsetzung der Entwicklungsarbeiten war deshalb, trockene Lager für die schnell drehenden Rotoren zu konstruieren. Zwei Methoden wurden genauer untersucht. Zum einen ermöglichten neuartige und hochwertigere Magnetstoffe die Konstruktion von aktiven und passiven Magnetlagern. Passive Magnetlager basieren auf Permanentmagneten während aktive Magnetlager einen komplexeren Aufbau besitzen. Sensoren stellen in ihnen die Lage des Rotors fest und geben diese als Signal an eine Regelelektronik. Diese steuert Elektromagneten an, die dann die Position des Rotors verändern.
Als zweite Methode wurde versucht, Gaslager für die Rotoren zu verwenden.

Während die Magnetlager trotz hohem elektronischen Regelaufwand und beträchtlicher Kosten Anwendung finden und mittlerweile zu den konventionellen Lagern zu zählen sind, haben sich Gaslager bisher nicht durchsetzen können.

In den Druckschriften DE-OS 22 55 618 und DE-OS 23 59 456 werden Turbomolekularpumpen mit Gaslager in verschiedenen Varianten vorgestellt. Mit diesen werden die oben beschriebenen Nachteile von mechanischen und magnetischen Lagern teilweise umgangen. Dass sie sich jedoch im praktischen Einsatz nicht durchsetzen konnten, hat folgende Gründe: Zu großer Gasdurchsatz, störende Toträume zwischen Rotor- und Statorscheiben, zu große Baulänge der Pumpe, mangelnde Stabilität, unzureichende Präzision über die gesamte Baulänge bei der Montage u.a.

Die Weiterentwicklung der Gaslager führte zu Systemen, mit denen ein Teil dieser Nachteile behoben werden kann (DE-PS 44 36 156). Durch Anwendung von Lasertechnik wird es möglich, eine große Anzahl von Mikrolöchern in die Lagerflächen zu bohren. Diese treten an die Stelle weniger großer Düsen herkömmlicher Gaslager. Dadurch wird eine stabile Lagerung bewirkt, der Gasdurchsatz und die Toträume werden reduziert und die Steifigkeit kann durch engere Spalte erhöht werden.

Die beschrittenen Wege bei der Konstruktion von gasgelagerten Gasreibungspumpen können in zwei Kategorien eingeteilt werden. Entscheidendes Merkmal ist hierbei die Art der Lagerung des Rotors. Dies ist zum einen die Lagerung eines glockenförmigen Rotors nach DE-OS 23 59 456, zum anderen eine fliegende Lagerung, wie sie in DE-OS 199 15 983 offenbart ist.

Glockenförmige Rotoren, wie z.B. in DE-OS 22 55 618 offenbart, sind heutzutage in Turbomolekularpumpen verbreitet, insbesondere magnetisch gelagerte Pumpen werden auf diese Weise gebaut. Für gasgelagerte Pumpen ist diese Bauweise ebenfalls sehr interessant, denn der Vorteil dieser Lagerung ist, dass beide Lagerstellen innerhalb des Rotors sitzen. Das Gas, das den Gasfilm erzeugt, auf dem der Rotor schwebt, kann bei diesem Aufbau nicht in den Hochvakuumbereich gelangen. Dabei nimmt man den großen Nachteil dieser Rotoren zwangsweise in Kauf: Aufgrund des großen Nabendurchmessers ist es nicht möglich, die Rotorflügel in Form von Rotorscheiben auf eine Hohlwelle zu fügen. Viel mehr muss man diese Rotoren aus einem Stück herstellen, was eine erhebliche Anforderung an die Produktion stellt. Die Bearbeitungszeit ist deutlich länger wie wenn man Scheiben benutzen kann, ein kleiner Fehler im Herstellungsprozess bedeutet gleich den kompletten Verlust des Rotors. Die Herstellung glockenförmiger Rotoren ist also sehr teuer.
Eine fliegende Lagerung eines Rotors nach Art von DE-OS 199 15 983 weist diese Probleme nicht auf. Jedoch ist diese Art der Lagerung aus rotordynamischen Gesichtspunkten alles andere als wünschenswert. Zum einen findet eine Verlagerung der Eigenresonanzen des Rotors zu niedrigeren Frequenzen hin statt. Dies reduziert die maximal erreichbare Drehzahl und verschlechtert damit die Pumpeigenschaften. Vor allem aber sind die Belastungen der Lager, insbesondere des rotornahen Lagers, durch deutlich höhere Lagerkräfte nachteilig. Sie erhöhen die Anforderungen an die Lager und reduzieren die Verträglichkeit von beispielsweise hohen Gaslasten. Ferner ist dieses Lagerprinzip nicht von vorneherein dicht, es ist also dafür Sorge zu tragen, das Gas aus den Lager nicht in den Hochvakuumbereich gelangen kann.

Die DE 37 16 221 A schlägt eine Turbomolekularpumpe mit Gaslagern an allen Stützstellen der Welle vor, wobei ein kostspieliger Glockenrotor zum Einsatz kommt, weshalb sich alle Gaslager auf der Vorvakuumseite befinden.
Die DE 43 27 506 A stellt eine gasgelagerte Vakuumpumpe vor, deren Lager am Wellenende liegen. Beide Wellenende befinden sich ebenfalls im Vorvakuumbereich.
Die FR-A-1 475 765 zeigt eine Turbomolekularpumpe, die eine komplett magnetisch gelagerte Welle aufweist, wobei ein aktives Magnetlager im Hochvakuumbereich vorgeschlagen wird.

Der Erfindung liegt die Aufgabe zugrunde, eine trocken gelagerte Gasreibungspumpe zu bauen. Sie soll durch eine einfache Konstruktion gekennzeichnet sein, die eine preisgünstige Fertigung erlaubt. Die Lagerung soll zudem günstige rotordynamische Eigenschaften besitzen.

Die Aufgabe wird gelöst durch die kennzeichnenden Merkmale des ersten Anspruchs.
Die Verwendung zweier unterschiedlicher aber von organischen Schmiermitteln freien Lagerprinzipien ermöglicht es, die Vorteile der trockenen Lagerung (wartungsfrei, kohlenwasserstofffrei) mit den Vorteilen der höheren rotordynamischen Stabilität und deutlich geringeren Produktionskosten zu verbinden.
Zum Einsatz kommt ein trockenes konventionelles Lager auf der Hochvakuumseite am dortigen Ende der Rotorwelle und eine Gaslagerung auf der Vorvakuumseite, welches den Rotor in axialer und radialer Richtung unterstützt. Die Lagerung an beiden Enden der Rotorwelle führt zu bestmöglichen rotordynamischen Eigenschaften, da die Lagerkräfte niedrig gehalten werden und die Eigenresonanzen der Welle hohe Drehzahlen erlauben.

An Hand des Abbildungen soll die vorliegende Erfindung näher erläutert werden.
Fig. 1: Eine Rotorwelle schematisch dargestellt und ihre Freiheitsgrade
Fig. 2: Eine Turbomolekularpumpe, die nach der Lehre der vorliegenden Erfindung gestalt wurde.

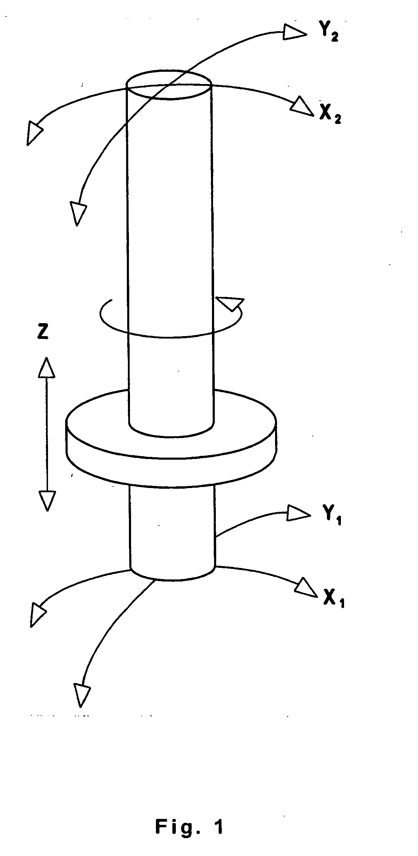

Eine Welle wie sie in einer Gasreibungspumpe als Träger des Rotors enthalten ist, besitzt sechs Freiheitsgrade. Dies ist in Figur 1 dargestellt. Einer der Freiheitsgrade ist der Rotatorische, welcher für die Funktion der Pumpe entscheidend ist und vom Motor beeinflusst wird. Als z bezeichnet ist der axiale Freiheitsgrad, zu dem gibt es noch die Kippfreiheitsgrade x1, y1 am unteren, vorvakuumseitigen Ende und x2, y2 am oberen, hochvakuumseitigen Ende der Welle. Diese radialen und axialen Freiheitsgrade müssen durch Lagerstellen unterstützt werden.
Gegenüber den bestehenden Lösungen werden erfindungsgemäß die Freiheitsgrade x2,y2 durch ein trockenes konventionelles Lager, beispielsweise ein permanentmagnetisches Lager, gestützt. Damit kommt ein ölfreies und wartungsfreies Lager im Hochvakuumbereich zum Einsatz.
Die Freiheitsgrade x1, y1 und z werden erfindungsgemäß durch Gaslager unterstützt, womit eine einfachere und kostengünstigere Lagerung als mit aktiven Magnetlagern erreicht wird. Die Lagerpunkte liegen im Gegensatz zu bekannten Konzepten für gasgelagerte Gasreibungspumpen an den Enden der Welle, wodurch eine aus Sicht der Rotordynamik bestmögliche Unterstützung erfolgt. Die Eigenresonanzen eines an beiden gelagerten Rotors erlauben höhere Drehzahlen, wodurch die Pumpeigenschaften der Pumpe verbessert werden. Zur Umsetzung der Erfindung können alle Arten von Gaslager eingesetzt werden, insbesondere aerodynamische und aerostatische Lager.

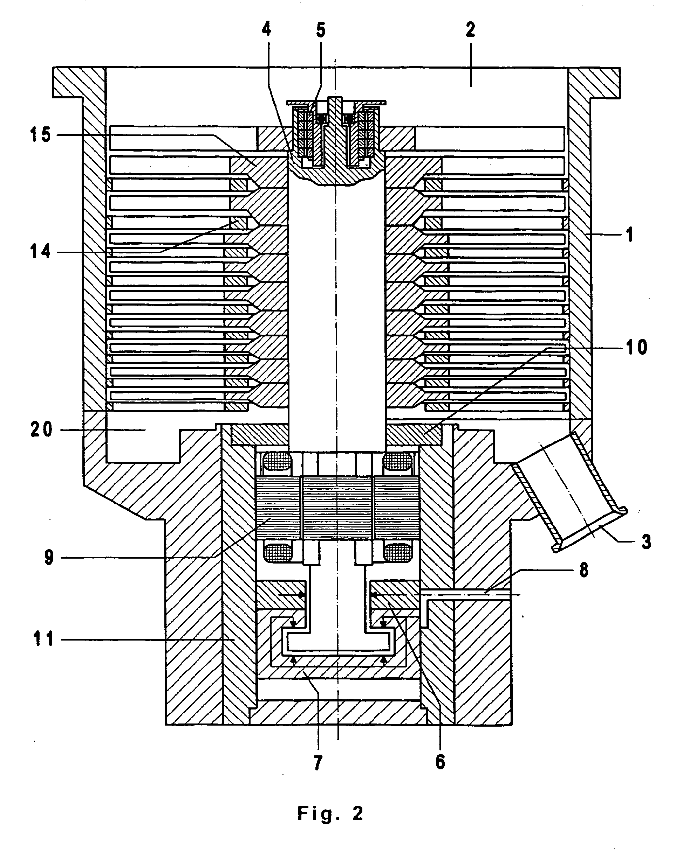

Die Anwendung dieses neuartigen Prinzips in einer Gasreibungspumpe ist in Figur 2 am Beispiel einer Turbomolekularpumpe dargestellt. Im Pumpengehäuse 1 mit Ansaugöffnung 2 und Gasaustrittsöffnung 3 sind die feststehenden pumpaktiven Bauteile als Statorscheiben 14 montiert. Die rotierenden pumpaktiven Bauteile sind als Rotorscheiben 15 mit der Rotorwelle 4 fest verbunden. Diese wird durch eine Antriebseinrichtung 9 in Rotation versetzt.

Die Rotorwelle 4 wird gelagert durch das Radiallager 5 auf der Hochvakuumseite und das Radiallager 6 und das Axiallager 7 auf der Vorvakuumseite. Das Lager 5 ist als trockenes konventionelles Lager ausgebildet ist, beispielsweise als permanentmagnetisches Lager.
In einer zylindrischen Hülse 11 sind das untere radiale Gaslager 6, das axiale Gaslager 7 und die Antriebseinrichtung 9 untergebracht. Über eine Gaszuführung 8 erfolgt die Versorgung der vorhanden Gaslager mit Arbeitsgas. Dieses Arbeitsgas, welches den Gasfilm erzeugt, auf dem das zu lagernde Objekt schwebt, strömt aus den Gaslagern aus. Es darf nicht in den Bereich niedrigen Drucks gelangen und muss durch geeignete Dichtungsmittel 10 von Schöpfraum und Gasauslass 20 ferngehalten werden. Diese Dichtungsmittel können beispielsweise Labyrinthdichtungen sein. Vorteilhaft ist es, die Lager 6 und 7 mit gleichem Außendurchmesser zu versehen und dann in die Hülse 11 einzubringen.
Eine kostengünstige Herstellung des Rotors ist möglich, da die rotierenden pumpaktiven Bauteile 15 einzeln hergestellt und anschließend als Paket auf die Rotorwelle gefügt werden können.

Bei Gaslagern sind sehr hohe Ansprüche an die Maßhaltung zu stellen, geringe Fehler bei der Herstellung schließen die Verwendung in der Pumpe aus. Ein modularer Aufbau der Gaslager verringert die Herstellungskosten, weil fehlerhafte Bauteile nicht zum Totalverlust einer Pumpe führen. Im folgenden ist unter einem Modul eine Baueinheit zu verstehen, die die notwendigen Bauteile eines Lagers enthält. So können das radiale oder die Kombination aus axialem und radialem Gaslager in ein einziges Modul zusammengefasst werden. Dieses Modul wird dann in die Hülse 11 im unteren Teil des Pumpengehäuses eingebaut. Die Anwendung des Modulprinzips ist nicht alleine auf die Gaslager beschränkt, so können auch andere Lagerprinzipien in modular aufgebaut sein. Beispielsweise können auch Magnetlager und Gaslager in einem oder in mehreren Modulen kombiniert sein.
Weiterhin ist es vorteilhaft, auch die Antriebseinrichtung 9 in ein passendes Modul einzubauen und zusammen mit den anderen Modulen in die Hülse einzubringen.

## Patentansprüche

1. Gasreibungspumpe mit feststehenden pumpaktiven Bauteilen (14) und rotierenden, auf einer drehbaren Rotorwelle (4) fixierten, pumpaktiven Bauteilen (15), wobei die Rotorwelle am hochvakuumseitigen Ende ein Lager (5) und am vorvakuumseitigen Ende eine Lageranordnung besitzt, **dadurch gekennzeichnet, dass** das hochvakuumseitige Lager ein Permanentmagnetlager ist und die vorvakuumseitige Lageranordnung mindestens ein Gaslager enthält.

2. Gasreibungspumpe nach Anspruch 1 **dadurch gekennzeichnet, dass** die Welle vorvakuumseitig radial durch ein Gaslager (6) und axial durch ein konventionelles Lager (7) gestützt wird.

3. Gasreibungspumpe nach Anspruch 1 **dadurch gekennzeichnet, dass** die Welle vorvakuumseitig axial durch ein Gaslager (7) und radial durch ein konventionelles Lager (6) gestützt wird.

4. Gasreibungspumpe nach Anspruch 1 **dadurch gekennzeichnet, dass** die Welle vorvakuumseitig radial (6) und axial (7) durch Gaslager gestützt wird.

5. Gasreibungspumpe nach Anspruch 1 **dadurch gekennzeichnet, dass** mindestens eines der Lager als Modul ausgebildet ist.

6. Gasreibungspumpe nach einem der vorhergehenden Ansprüche, **dadurch gekennzeichnet, dass** auch die Antriebseinrichtung (9) als Modul ausgebildet ist.

7. Gasreibungspumpe nach einem der vorhergehenden Ansprüche, **dadurch gekennzeichnet, dass** Radiallager (6) und Axiallager (7) in einem Modul zusammengefasst sind.

8. Gasreibungspumpe nach einem der Ansprüche 1 bis 4, **dadurch gekennzeichnet, dass** mindestens eines der Lager (6,7) und die Antriebseinrichtung (9) in einem Modul zusammengefasst sind.

9. Gasreibungspumpe nach einem oder mehreren Ansprüchen 5 bis 8, **dadurch gekennzeichnet, dass** mindestens eines der Module mit einem zylindrisch ausgebildeten Teil (11) des Pumpengehäuses in Eingriff gebracht und gesichert ist.

10. Gasreibungspumpe nach einem der vorhergehenden Ansprüche, **dadurch gekennzeichnet, dass** Dichtungsmittel 10 zwischen Gaslager und der Seite niedrigeren Drucks vorhanden sind.

## Claims

1. Gas friction pump having fixed active pump components (14) and having rotating active pump components (15) fixed on a rotatable rotor shaft (4), wherein the rotor shaft at the high-vacuum end has a bearing (5) and at the backing-pressure end has a bearing arrangement, **characterized in that** the high-vacuum-end bearing is a permanent-magnet bearing and the backing-pressure-end bearing arrangement contains at least one gas bearing.

2. Gas friction pump according to claim 1 **characterized in that** the shaft at the backing-pressure end is supported radially by a gas bearing (6) and axially by a conventional bearing (7).

3. Gas friction pump according to claim 1 **characterized in that** the shaft at the backing-pressure end is supported axially by a gas bearing (7) and radially by a conventional bearing (6).

4. Gas friction pump according to claim 1 **characterized in that** the shaft at the backing-pressure end is supported radially (6) and axially (7) by gas bearings.

5. Gas friction pump according to claim 1 **characterized in that** at least one of the bearings is configured as a module.

6. Gas friction pump according to one of the preceding claims, **characterized in that** the drive device (9) is also configured as a module.

7. Gas friction pump according to one of the preceding claims, **characterized in that** radial bearing (6) and axial bearing (7) are combined in a module.

8. Gas friction pump according to one of claims 1 to 4, **characterized in that** at least one of the bearings (6, 7) and the drive device (9) are combined in a module.

9. Gas friction pump according to one or more of claims 5 to 8, **characterized in that** at least one of the modules is brought into engagement with a cylindrically formed part (11) of the pump case and secured.

10. Gas friction pump according to one of the preceding claims, **characterized in that** sealing means 10 are provided between gas bearing and the lower-pressure end.

## Revendications

1. Pompe à friction gazeuse comprenant des éléments immobiles (14) actifs en pompage et des éléments rotatifs (15) actifs en pompage, ces derniers étant fixés sur un arbre de rotor tournant (4), dans laquelle l'arbre de rotor comporte, à son extrémité du côté du vide poussé, un palier (5) et, à son extrémité du côté du vide préliminaire, un agencement de paliers, **caractérisée en ce que** le palier du côté du vide poussé est un palier à aimant permanent et **en ce que** l'agencement de paliers du côté du vide préliminaire comporte au moins un palier à gaz.

2. Pompe à friction gazeuse selon la revendication 1 , **caractérisée en ce que** l'arbre est supporté, du côté du vide préliminaire, radialement par un palier à gaz (6) et axialement par un palier classique (7).

3. Pompe à friction gazeuse selon la revendication 1 , **caractérisée en ce que** l'arbre est supporté, du côté du vide préliminaire, axialement par un palier à gaz (7) et radialement par un palier classique (6).

4. Pompe à friction gazeuse selon la revendication 1 , **caractérisée en ce que** l'arbre est supporté, du côté du vide préliminaire, radialement (6) et axialement (7) par des paliers à gaz.

5. Pompe à friction gazeuse selon la revendication 1 , **caractérisée en ce qu'**au moins un des paliers est réalisé en tant que module.

6. Pompe à friction gazeuse selon l'une quelconque des revendications précédentes, **caractérisée en ce que** le dispositif d'entraînement (9) est également réalisé en tant que module.

7. Pompe à friction gazeuse selon l'une quelconque des revendications précédentes, **caractérisée en ce que** le palier radial (6) et le palier axial (7) sont regroupés dans un module.

8. Pompe à friction gazeuse selon l'une quelconque des revendications 1 à 4, **caractérisée en ce qu'**au moins un des paliers (6, 7) et le dispositif d'entraînement sont regroupés dans un module.

9. Pompe à friction gazeuse selon l'une quelconque ou plusieurs des revendications 5 à 8, **caractérisée en ce qu'**au moins un des modules est engagé et bloqué dans une partie cylindrique (11) du corps de pompe.

10. Pompe à friction gazeuse selon l'une quelconque des revendications précédentes, **caractérisée en ce que** des garnitures d'étanchéité (10) sont présentes entre le palier à gaz et le côté à pression inférieure.
